# EUROPEAN PATENT APPLICATION

(11) **EP 4 667 410 A1**
(43) Date of publication of application: **24.12.2025**
(21) Application number: 24183414.2
(22) Date of filing: 20.06.2024
(51) Int. Cl.: B66C 13/46, B66C 15/06

(54) **METHOD, CLEARANCE INVESTIGATING DEVICE, CLEARANCE INVESTIGATING ARRANGEMENT, SYSTEM, COMPUTER PROGRAM AND COMPUTER PROGRAM PRODUCT FOR INVESTIGATING A CONTAINER AND A ROAD CHASSIS**

(71) Applicant: ABB SCHWEIZ AG, 5400 Baden (CH)
(72) Inventor: TJERNGREN, Dan, 723 36 Västerås (SE); LAGERHOLM, Lars, 722 27 Västerås (SE); SUNDHOLM, Niklas, 723 56 Västerås (SE)
(74) Representative: Kransell & Wennborg KB

(57) **Abstract**

The invention relates to a method, clearance investigating device, clearance investigating arrangement, system, computer program and computer program product for investigating a container (32A) and a road chassis (34A). The device obtains a view of a region of interest (ROI1) in which the container (32A) is fastenable to the road chassis (34A) via a locking mechanism (36A), the view being obtained when the container (32A) is being lifted from the road chassis (34A), obtains an analysis of the view comprising a determination of if there is a clearance between the container (32A) and the road chassis (34A) at the locking mechanism (36A) in the region of investigation (ROI1) and determines if lifting of the container (32A) can be continued or not based on the analysis, where the container (32A) can be continued to be lifted if there is a clearance and cannot be continued to be lifted if there is no clearance.

## Description

### TECHNICAL FIELD

The invention relates to a method, clearance investigating device, clearance investigating arrangement, system, computer program and computer program product for investigating a container and a road chassis.

### BACKGROUND

Containers may be placed on road chassis and transported by trucks. When a container is being transported this way the container is locked to the road chassis by a number of locking mechanisms, often referred to as twist locks. The locking mechanisms lock the container to the road chassis and thereby ensure that the container does not slip off.

Containers that have been transported in this way may additionally need to be loaded onto cargo ships. When this is done the locking mechanism is unlocked and thereafter a crane can pick up the container from the road chassis and place it on the cargo ship.

However, the unlocking of the locking mechanism is typically done by hand and thus it is possible that a locking mechanism keeps being locked to a road chassis due to human error.

This is a highly undesirable situation.

There is therefore a need for improving safety when a container is to be lifted from a road chassis.

### SUMMARY

One object of the invention is therefore to improve safety when a container is to be lifted from a road chassis.

This object is according to a first aspect achieved by a method for investigating a container and a road chassis, the method being performed by a clearance investigating device and comprising:
obtaining a current view of at least one region of interest in which the container is fastenable to the road chassis via a locking mechanism, the current view being obtained when the container is being lifted from the road chassis,
obtaining an analysis of the current view, which analysis comprises a determination of if there is a clearance between the container and the road chassis at the locking mechanism in the region of investigation, and determining if lifting of the container can be continued or not based on the analysis of the current view, where the container can be continued to be lifted if there is a clearance and cannot be continued to be lifted if there is no clearance.

The object is according to a second aspect achieved through a clearance investigating device for investigating a container and a road chassis, the clearance investigating device comprising a processor operative to:
obtain a current view of at least one region of interest in which the container is fastenable to the road chassis via a locking mechanism, the current view being obtained when the container is being lifted from the road chassis,
obtain an analysis of the current view, which analysis comprises a determination of if there is a clearance between the container and the road chassis at the locking mechanism in the region of investigation, and
determine if lifting of the container can be continued or not based on the analysis of the current view, where the container can be continued to be lifted if there is a clearance and cannot be continued to be lifted if there is no clearance.

The object is according to a third aspect achieved by a clearance investigating arrangement for investigating a container and a road chassis, the arrangement comprising the clearance investigating device according to the second aspect and a group of view capturing devices comprising a first view capturing device operable to cover the region of investigation and provide views of the region of investigation to the clearance investigating device.

The object is according to a fourth aspect achieved by a system for investigating a container and a road chassis, the system comprising a crane, a crane control device and the arrangement according to the fourth aspect.

The object is according to a fifth aspect achieved through a computer program for investigating a container and a road chassis, the computer program comprising computer program code which when run by a processor causes the processor to:
obtain a current view of at least one region of interest in which the container is fastenable to the road chassis via a locking mechanism, the current view being obtained when the container is being lifted from the road chassis,
obtain an analysis of the current view, which analysis comprises a determination of if there is a clearance between the container and the road chassis at the locking mechanism in the region of investigation, and
determine if lifting of the container can be continued or not based on the analysis of the current view, where the container can be continued to be lifted if there is a clearance and cannot be continued to be lifted if there is no clearance.

The object is according to a sixth aspect achieved through a computer program product for investigating a container and a road chassis, the computer program product comprising a data carrier with the computer program according to the fifth aspect.

The view capturing device may be a camera, a laser, a Radar or a Lidar.

The analysis of the current view may be obtained through being received from a cloud computer. Alternatively, it may be obtained through the clearance investigating device making the analysis.

The lifting may be performed with steps that incrementally increase a lifting distance of the container.

According to a first variation of the first aspect, the method further comprises analysing the clearance in case one has been determined to exist in the current view and where the determining of if lifting can be continued or not is also based on the analysing of the clearance.

According to a corresponding variation of the second aspect, the processor is further operable to analyse the clearance in case one has been determined to exist in the current view and where the determining of if lifting can be continued or not is also based on the analysing of the clearance.

It is additionally possible that the analysing of the clearance comprises comparing the clearance with a clearance threshold and determining that lifting should not continue if the clearance is below the clearance threshold.

It is additionally possible that if the clearance is below the clearance threshold for the lift in one current lifting step, the lifting is allowed to continue with a following lifting step in which a following view of the region of interest is investigated, and lifting should not be continued if the clearance is below the clearance threshold also in the following lifting step.

It is also possible that the clearance threshold is only used when the lifting distance is higher than the clearance threshold.

The clearance threshold may be in the range 0.3 - 1.0 m.

The determining of the region of interest may be based on container data of a work order.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The invention will now be described in more detail in relation to the enclosed drawings, in which:
fig. 1 schematically shows a system for investigating clearances between container and road chassis comprising a crane, a crane control device, a clearance investigating device and a group of view capturing devices,
fig. 2 shows one realization of the clearance investigating device,
fig. 3 shows a computer program product in the form of a CD ROM with computer program code used to implement a clearance investigating function of the clearance investigating device,
fig. 4 shows a flow chart of a number of method steps in an embodiment of a method of investigating a container and a road chassis being performed by the clearance investigating device,
fig. 5 shows a view from above of four container carrying trucks parked in four truck transfer lanes covered by four view capturing devices,
fig. 6 shows a view from behind of a first and a second truck and a first view capturing device,
fig. 7 shows a view from behind of the first and second truck as a first and a second container are being lifted from a first and a second road chassis of the first and second trucks,
fig. 8 shows a view of a first and second region of interest of the first container and the first road chassis being captured by the first view capturing device.

### DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

The invention is generally directed towards determining if a container that is being lifted from a road chassis of a truck has been properly released or not.

More particularly, aspects of the present disclosure are concerned with a system for clearance investigating comprising a clearance investigating arrangement, a clearance investigating arrangement comprising a clearance investigating device as well as a clearance investigating device.

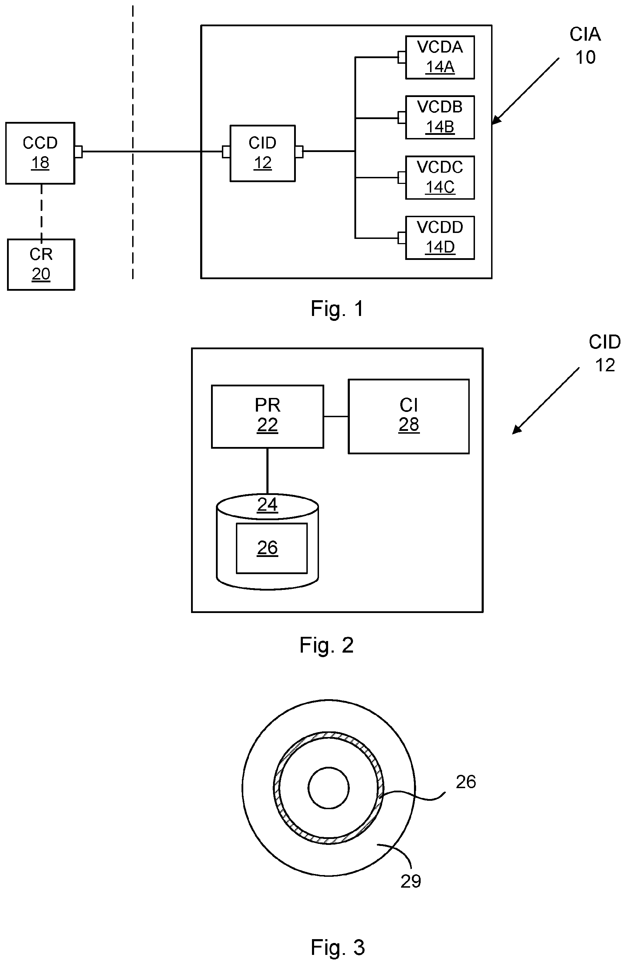

Fig. 1 schematically shows a clearance investigation system that comprises a clearance investigating arrangement CIA 10, a crane CR 20 as well as a crane control device 18. The clearance investigating arrangement 10 in turn comprises a clearance investigating device CID 12 as well as a group of view capturing devices. In the present example, there is a first view capturing device VCDA 14A, a second view capturing device VCDB 14B, a third view capturing device VCDC 14C and a fourth view capturing device VCDD 14D in the group.

A view capturing device may use suitable technology for capturing views that are used to determine if there are clearances between containers and road chassis. As such a view capturing device may be a camera, such as a video camera, a laser, a radar or a Lidar.

The crane control device 18 may be a controller, such as a Programmable Logic Controller (PLC) used to control the operation of the crane 20, like controlling the crane 20 to lift or hoist objects like containers. The crane control device 18 may additionally be connected to the clearance investigating device 12 over an Ethernet connection and the clearance investigating device 12 may be connected to the view capturing devices 14A, 14B,14C, 14D also via Ethernet connections. It should here be realized that Ethernet is merely one example of a way in which the different entities may be interconnected. Also other techniques are possible, such as wireless techniques.

Fig. 2 schematically shows one realization of a clearance investigating device CID 12. The clearance investigating device 12 comprises a processor PR 22 and a data storage 24 with a computer program 26 comprising computer program instructions that, when executed by the processor 22, implements a clearance investigating function. There is also a first communication interface CO 28, here realized as an Ethernet interface for communicating with the crane control device 18 and the group of view capturing devices 14A, 14B, 14C, 14D. It can also be used for communicating with a cloud environment in which computations may be made for the clearance investigating device 12.

The clearance investigating device 12 may thus comprise a processor 22 with associated program memory 24 including a computer program 26 with computer program code for implementing the clearance investigating function.

A computer program may also be provided via a computer program product, for instance in the form of a non-transitory computer readable storage medium or data carrier, like a CD ROM, a memory stick or a memory card, carrying such a computer program with the computer program code, which will implement the clearance investigating function when being loaded into a processor. One such computer program product in the form of a CD ROM 29 with the above-mentioned computer program 26 comprising computer program code is schematically shown in fig. 3.

During transportation on the road of a container by a truck, the container is fasted to a road chassis through the use of a locking mechanism, which locking mechanism is often termed a twist lock. The locking mechanism ensures that the container is safely kept on the road chassis during transportation, so that it does not slip off.

After being transported, the container may need to be lifted off the road chassis using a crane, for instance in order to be lifted onto a ship. When this is done, it is important that the locking mechanism no longer keeps the container fastened to the road chassis.

The unlocking is often done by humans, which means that it is possible that this step is missed.

If an attempt is made to lift a container from a road chassis where the locking mechanism keeps the container locked to the road chassis, the lifting may cause also the road chassis to be lifted. This is highly undesirable.

Aspects of the present disclosure address this situation.

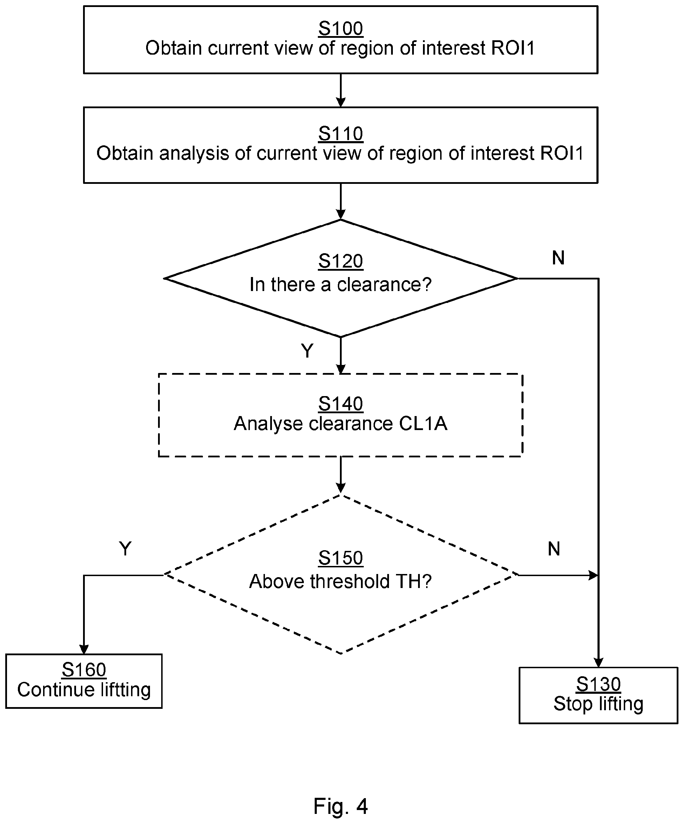

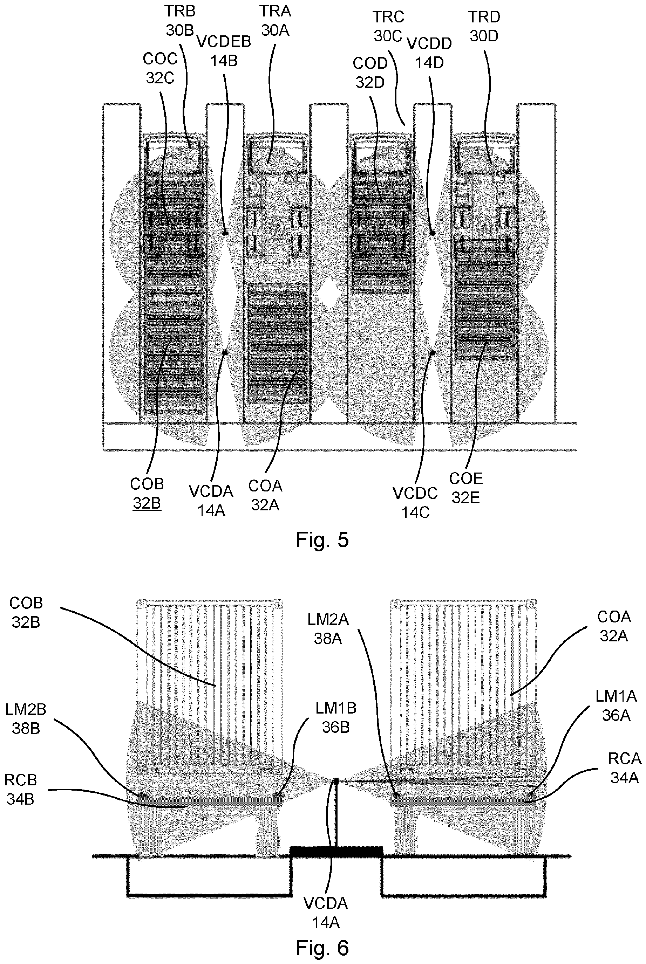

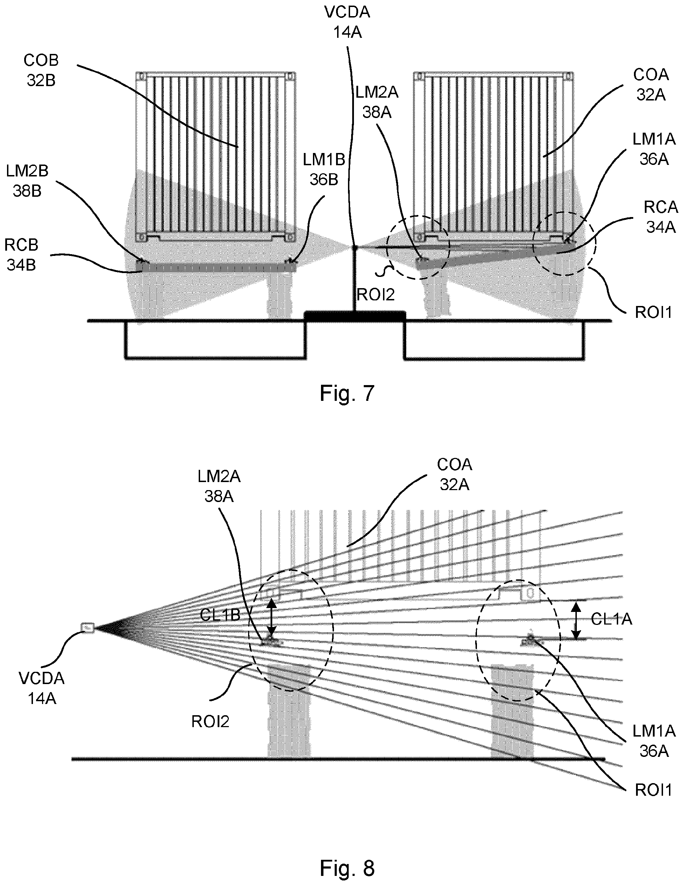

How this can be done will now be described in more detail with reference also being made to fig. 4, 5, 6, 7 and 8, where fig. 4 shows a flow chart of a number of method steps in an embodiment of a method of investigating a container and a road chassis being performed by the clearance investigating device, fig. 5 shows a view from above of four container carrying trucks parked in four truck transfer lanes covered by four view capturing devices, fig. 6 shows a view from behind a first and a second truck and a first view capturing device, fig. 7 shows a view from behind the first and second truck as a first and a second container are being lifted from a first and a second road chassis of the first and second trucks and fig. 8 shows a view of a first and second region of interest of the first container and the first road chassis being captured by the first view capturing device.

As can be seen in fig. 5 and 6, a truck with a road chassis on which a container is placed can be parked in a truck transfer lane. As an example there can be four truck transfer lanes placed side by side, where a first truck TRA 30A is placed in a first central truck transfer lane, a second truck TRB 30B is placed in a second left lateral truck transfer lane, a third truck TRC 30C is placed in a third central truck transfer lane to the right of the first central truck transfer lane and fourth truck TRD 30D is placed in a fourth right lateral truck transfer lane. It can be seen that the first truck 30A carries a first container COA 32A, the second truck 30B carries a second container COB 32B and a third container CoC 32C, the third truck 30C carries a fourth container COD 32D and the fourth truck 30D carries a fifth container COD 32D.

As was mentioned earlier, there are four view capturing devices. In this case the first view capturing device VCDA 14A covers a first part of the first and second truck transfer lanes and the second view capturing device VCDB 14B covers a second part of the first and second truck transfer lanes. The third view capturing device VCDC 14C in turn covers a first part of the third and fourth truck transfer lanes and the fourth view capturing device VCDD 14D covers a second part of the third and fourth truck transfer lane. The first part of the truck transfer lanes is in this case the part where the rear end of a road chassis is placed while the second part is the end where the front of the truck is placed.

The view capturing devices 14A, 14B, 14C, 14D are provided at a vertical height that allows them to cover a region of interest in relation to a container, which region of interest is a region where the container is attachable to a road carrier with a locking mechanism. The view capturing device may more particularly be oriented such that the part of a road chassis at which the locking mechanism is placed is close to an edge of a field of view in a vertical downward direction. This may be done in order to allow the observation of if the container is being lifted or not.

Furthermore, a container is shaped as a box and an area of the container that is placed onto a corresponding road chassis is typically rectangular in shape. Locking mechanisms are typically provided at the corners of this rectangle. It is thus important that a view capturing device covers at least one corner of the container and with advantage two, which may be a first corner on one side of the truck that faces the view capturing device. However, as will be made clear later it is not necessary to be able to cover an opposite second corner on the opposite side of the truck that faces away from the view capturing device.

It is additionally possible that the view capturing devices are rotatable around a vertical axis in order to be able to cover two different truck transfer lanes. It should also be realized that it is possible to provide more view capturing devices, for instance through a view capturing device only covering one truck transfer lane or a part of a truck transfer lane.

The operation of the clearance investigating device will now be described for one container, as an example the first container 32A. It should be realized that the desired operation can be carried out for all the containers.

The clearance investigating function may first determine the region of interest based on container data and perhaps also based on road chassis data as well as data about the layout of the truck transfer lanes. The container data may be obtained from work orders in the system. This determination may more particularly be used for determining the location of a corner of the container that rests on a corresponding road chassis and where a locking mechanism is provided.

Furthermore, the crane 20 is attached to the container 32A for lifting the container 32A and then the crane control device 18 starts controlling the crane 20 to lift the container 32A. The lifting may additionally be performed with steps that incrementally increase a lifting distance of the container.

In operation, the clearance investigation function obtains a current view of at least one first region of interest ROI1 in which the container 32A is fastenable to the road chassis 34A via a first locking mechanism LM1A 36A, S100, where the current view is obtained when the container 32A is being lifted from the road chassis 34A. In this case also a current view of a second region of interest ROI2 is obtained where the container 32A is fastenable to the road chassis 34A via a second locking mechanism LM2A 38A. As an example, it gets a view of the first region of interest ROI1 at a side of the container 32A facing away from the first view capturing device VCDA 14A and a view of the second region of interest ROI2 at a side of the container 32A facing the view capturing device VCDA 14A. The first and second regions ROI1, ROI2 of interest are in this case regions at rear corners of the container and road chassis. The first region of interest ROI1 is here detected via the second region of interest ROI2 through a gap between the container 32A and road chassis 34A occurring because of the lifting being made.

Thereafter the clearance investigating function obtains an analysis of the current view of the first region of interest ROI1, S110, which analysis may be an analysis regarding if there is a clearance between the container 32A and the road chassis 34A at the first locking mechanism 36A in the first region of interest ROI1. If there is a clearance CL1A, the analysis may additionally involve determining the size of the clearance CL1A. The clearance investigating device 12 may perform the analysis itself. Alternatively, it may send captured image covering a view comprising the region of interest together with a request for analysis to a cloud computer, such as a cloud server, and receive a response to the request therefrom, which response comprises the analysis. The analysis of the image may thus be performed in the cloud.

Then a determining is made if lifting of the container 32A can be continued or not based on the analysis of the current view, where the container can be continued to be lifted if there is a clearance and cannot be continued to be lifted if there is no clearance.

In case there is no clearance, S120, lifting is to be stopped, S130, i.e. the container should not be allowed to be continued to be lifted. However, if there is a clearance CL1A, S120, the container 32A can possibly be continued to be lifted, S160.

If there is a clearance CL1A it is additionally possible that further investigations are made. One such investigation is an analysing of the clearance CL1A, S140. Thus, there may be an analysing of the clearance in case one has been determined to exist in the current view and in this case the determining of if lifting can be continued or not is also based on the analysing of the clearance.

More particularly, the clearance CL1A may be compared with a clearance threshold TH. In this case a determining that the clearance CL1A is insufficient may be made if it is below or smaller than the clearance threshold TH, S150.

Thus a determination may be made that lifting should be stopped, S130, if the clearance CL1A is smaller than the clearance threshold TH, S150, and otherwise that lifting is to be continued, S160. The determination that lifting should be stopped may thus be made if the size of the clearance CL1A is smaller than the clearance threshold TH.

It is possible that a determination is made that lifting is to be stopped as soon as the clearance CL1A is found to be below the clearance threshold TH.

A determination may be made that the clearance CL1A is below the clearance threshold TH for the lift in one current lifting step.

In this case it is additionally possible that the lifting is allowed to continue with a following lifting step in which a following view of the region of interest is investigated. Furthermore, in this case lifting should not be continued if the clearance CL1A is below the clearance threshold TH also in the following lifting step. The size of the clearance may thus need to be below the clearance threshold TH in investigations being made for more than one lifting step, which lifting steps may be consecutive. The number of consecutive lifting steps may as an example be two. Lifting may however be allowed to continue if the clearance is above the clearance threshold in the following lifting step.

It is additionally possible that the clearance threshold is only used when the lifting distance, i.e. the distance that the crane lifts the container, is higher than the clearance threshold.

The clearance threshold may be in the range 0.3 - 1.0 m.

It can in this way be detected if the first locking mechanism 36A is still locked. An example of this for the first region of interest is shown in fig. 7, while an unlocked first locking mechanism 36A is detected in fig. 6 and 8.

This can then be used to inform the crane control device 18 and/or an operator so that lifting is stopped.

In case the container 32A remains fastened to the road chassis 34A, it is not possible to observe the first region of interest ROI1. However, if this is the case a determination is made that the lifting is to be stopped based on observations made in the second region of interest ROI2 concerning the second locking mechanism 38A. As a determination is made that lifting is to be stopped in respect of the second locking mechanism 38A and the second region of interest ROI2, there is no need for any such determination in respect of the first region of interest ROI1 and the first locking mechanism 36A.

The same operations are performed also for the front end of the first container 32A using the first view capturing device 14A.

The previously described operations are typically also performed for all the containers on all road chassis in the four truck transfer lanes using all four view capturing devices.

Aspects of the present disclosure can also be described in the following way.

The clearance investigating device 12 operates by using the view capturing devices 14A, 14B, 14C, 14D which can be 3D LiDAR sensors in combination with a crane Load Positioning System (LPS). The view capturing devices are in the following also termed sensors. The clearance investigating device determines if a clearance is achieved beneath each container twist lock position during hoisting of the container.

The system may by designed to be agnostic to the physical attributes of the chassis and may rely only on information about the container type (high cube, normal), adequate sensor precision to furthest projected twistlock, spreader size location and the fully qualified crane load position (trolley, gantry, hoist height and trim/list/skew).

All detection and sensor software may execute on one or more high performance standard PCs with communication to the crane control device 18. The system can easily be extended to allow for one server to handle multiple cranes provided communication is available. The crane control device 18 may interact with the clearance investigating device 12 during a hoisting sequence by dedicated interface over Ethernet (TCP/IP).

The system software may also be agnostic to the actual sensor type, after consideration of the specific sensors point of view, and working on point cloud data to enable the system to future cost reductions and/or improved sensor precision.

The crane control device 18 may execute motion control and automation sequence logic and may communicate overall crane state and check request to the clearance determining device 12, the clearance determining device may thus indicate if there is a clearance in order to allow the crane control device 18 to proceed with a container lift.

The 3D Lidar Sensors may be placed on the long side of container to detect space between lock and container at a certain lift height. As an example, the sensors may be able to detect free space between road chassis and container from approximately 300 mm lift height. Depending on type of road chassis some more lift height can be needed.

At all times it is required to have free sight between the sensors covering a container and each corner of the container.

A sensor may be equipped with a sensor bracket. The sensor bracket may provide rigid height adjustable and weatherproof mounting for selected sensor. As an example, the height may be adjustable between 900 - 1600 mm. A sensor may also be prepared for power and ethernet cabling at the base of the unit.

A view capturing device in the form of a 3D LiDAR scanner may have the following properties:
- Horizontal read out at a resolution of 0,18° (10mm/ 3-meter distance).
- Vertically readout is done by 128 beams with a total angle of +-45° resolution of 0,7° (35mm/ 3-meter distance).

Two scanners may be placed so that they have clear view of the front and rear twistlock positions of the container. In this case they will also have a clear view of the center of a 40 ft container. This is for the scenario of having 2×20 ft containers. The 2×20 ft scenario is not shown in fig. 5 - 8. The figures also include example scans of the corresponding cases (lift of about 1 m).

As was mentioned earlier a container may need to be lifted from the road chassis of a truck.

When the container is landed on the road chassis, the clearance investigating device will, in the given example, only be able to detect the sides that are closest to the scanners. Therefore, the system will in this case only be active for evaluating the scanned data once the hoisting operation starts.

When the container is being hoisted, the scanners will continuously look for clearance gap around the twistlock positions in relation to the projected container position. The clearance investigating device knows where this position is based on information from LPS and the work order information.

In the case shown in fig. 7, one of the rear twistlocks is still locked onto the chassis. The clearance investigating device detects this and flags that something is still present even after a hoisting motion.

The lift sequence may additionally stop at certain heights for stationery analysis.

The goal is to improve the system so that the clearance investigating device can continuously scan for clearance. This allows the crane to minimize creep speed distance and hoisting operation never has to stop. The operation may in general follow the following steps:
1. Crane receives order to pick up a container from lane.
2. Crane lower spreader and lock to container.
3. Crane control device sends work order and load position information to clearance investigating device (continuous, <= 100ms).
4. Clearance investigating device continuously calculates projected container bottom twistlock positions based on work order and load position information (continuous, <= looms).
5. Spreader lift container with creep speed approx. 300mm / 1 Foot.
6. Crane send signal to clearance investigating device to start measure clearance.
7. Clearance investigating device verifies area beneath container corner/twistlock free clearance.
8 Clearance investigating device sends measurement status (ongoing, completed, etc.) and clearance information to crane control device.
9.1 If clearance investigating device measurement is completed but clearance is not achieved the Crane control device proceeds to lift to 500 mm and request second measurement.
9.2 If clearance is signaled from Clearance investigating device, the crane control device continues with hoist operation. If clearance is not signaled manual intervention is requested.

Below is a short description of the general idea of how the detecting of locked chassis/container can be made at each corner during the check made by the clearance investigating device:
1. Determine the region of interest (ROI) from job order and crane state information
2. Determine expected height level of the container and chassis sections as well as the expected free space (with margins)
3. Extract relevant data points with potential to pass through the ROI from the sensor frame
4. Evaluate specified number of frames to determine clearance a. E.g. it's necessary to check if the free space have data points passing through it and that they aren't blocked earlier by other structures
5. Avoid "false positives" by only requiring a certain percentage to signal clearance

The clearance investigating device then combines the result from each corner to determine if the crane can continue to lift the container or not.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore, the invention is only to be limited by the following claims.

## Claims

1. A method for investigating a container (32A) and a road chassis (34A), the method being performed by a clearance investigating device (12) and comprising:
obtaining (S100) a current view of at least one region of interest (ROI1) in which the container (32A) is fastenable to the road chassis (34A) via a locking mechanism (36A), the current view being obtained when the container (32A) is being lifted from the road chassis (34A),
obtaining (S110) an analysis of the current view, which analysis comprises a determination of if (S120) there is a clearance (CL1A) between the container (32A) and the road chassis (34A) at the locking mechanism (36A) in the region of investigation (ROI1), and
determining if lifting of the container (32A) can be continued or not based on the analysis of the current view, where the container (32A) can be continued to be lifted (S160) if there is a clearance (CL1A) and cannot be continued to be lifted (S130) if there is no clearance.

2. The method as claimed in claim 1, wherein the lifting is performed with steps that incrementally increase a lifting distance of the container (32A).

3. The method according to claim 1 or 2, further comprising analysing (S140) the clearance (CL1A) in case one has been determined to exist in the current view and where the determining of if lifting can be continued or not is also based on the analysing of the clearance (CL1A).

4. The method according to claim 3, wherein the analysing of the clearance (S140) comprises comparing the clearance (CL1A) with a clearance threshold (TH) and determining that lifting should not continue if the clearance (CL1A) is below the clearance threshold (TH).

5. The method as claimed in claim 4 when depending on claim 2, wherein if the clearance (CL1A) is below the clearance threshold (TH) for the lift in one current lifting step, the lifting is allowed to continue with a following lifting step in which a following view of the region of interest (ROI1) is investigated, and lifting should not be continued (S130) if the clearance is below the clearance threshold also in the following lifting step.

6. The method as claimed in claim 5, wherein the clearance threshold is only used when the lifting distance is higher than the clearance threshold.

7. The method as claimed in any previous claim, further comprising determining the region of interest based on container data of a work order.

8. A clearance investigating device (12) for investigating a container (32A) and a road chassis (34A), the clearance investigating device (12) comprising a processor (22) operative to:
obtain a current view of at least one region of interest (ROI1) in which the container (32A) is fastenable to the road chassis (34A) via a locking mechanism (36A), the current view being obtained when the container (32A) is being lifted from the road chassis (34A),
obtain an analysis of the current view, which analysis comprises a determination of if there is a clearance (CL1A) between the container (32A) and the road chassis (34A) at the locking mechanism (36A) in the region of investigation (ROI1), and
determine if lifting of the container (32A) can be continued or not based on the analysis of the current view, where the container (32A) can be continued to be lifted if there is a clearance (CL1A) and cannot be continued to be lifted if there is no clearance.

9. The clearance investigating device (12) as claimed in claim 8, the processor (22) being further operable to analyse the clearance (CL1A) in case one has been determined to exist in the current view and where the determining of if lifting can be continued or not is also based on the analysing of the clearance (CL1A).

10. The clearance investigating device (12) as claimed in claim 9, wherein the analysing of the clearance comprises comparing the clearance (CL1A) with a clearance threshold (TH) and determining that lifting should not continue if the clearance (CL1A) is below the clearance threshold (TH).

11. The clearance investigating device (12) as claimed in claim 10, wherein the lifting is performed with steps that incrementally increase a lifting distance of the container (32A) and if the clearance (CL1A) is below the clearance threshold (TH) for the lift in one current lifting step, the lifting is allowed to continue with a following lifting step in which a following view of the region of interest (ROI1)is investigated, and lifting should not be continued (S130) if the clearance is below the clearance threshold also in the following lifting step.

12. A clearance investigating arrangement (10) for investigating a container (32A) and a road chassis (34A), the arrangement (10) comprising the clearance investigating device (12) according to any of claims 8 - 11 and a group of view capturing devices (14A, 14B, 14C, 14D) comprising a first view capturing device (14A) operable to cover the region of investigation (ROI1) and provide views of the region of investigation (ROI1) to the clearance investigating device (12).

13. A system for investigating a container (32A) and a road chassis (34A), the system comprising a crane (20), a crane control device (18) and the arrangement (10) according to claim 12.

14. A computer program (26) for investigating a container (32A) and a road chassis (34A), the computer program (26) comprising computer program code which when run by a processor (22) causes the processor (22) to:
obtain a current view of at least one region of interest (ROI1) in which the container (32A) is fastenable to the road chassis (34A) via a locking mechanism (36A), the current view being obtained when the container (32A) is being lifted from the road chassis (34A),
obtain an analysis of the current view, which analysis comprises a determination of if there is a clearance (CL1A) between the container (32A) and the road chassis (34A) at the locking mechanism (36A) in the region of investigation (ROI1), and
determine if lifting of the container (32A) can be continued or not based on the analysis of the current view, where the container (32A) can be continued to be lifted if there is a clearance (CL1A) and cannot be continued to be lifted if there is no clearance.

15. A computer program product for investigating a container (32A) and a road chassis (34A), the computer program product comprising a data carrier (29) with said computer program (26) according to claim 14.
